# EUROPEAN PATENT APPLICATION

(11) **EP 4 746 433 A1**
(43) Date of publication of application: **20.05.2026**
(21) Application number: 24843352.6
(22) Date of filing: 27.06.2024
(51) Int. Cl.: H04N 23/65, H04N 23/55, H04N 23/68, G03B 5/06, G03B 3/10, G03B 13/36, G03B 17/12

(54) **CAMERA MODULE**

(30) Priority: 14.07.2023 KR 20230092066
(71) Applicant: LG INNOTEK CO. LTD, Gangseo-gu Seoul 07796 (KR)
(72) Inventor: KIM, Eun Mi, Seoul 07796 (KR); MOON, Young Seop, Seoul 07796 (KR)
(74) Representative: DREISS Patentanwälte PartG mbB
(86) International application number: PCT/KR2024/008982
(87) International publication number: WO 2025/018632

(57) **Abstract**

A camera module according to an embodiment of the present invention includes: a lens driving unit for driving a plurality of lenses; a position sensor unit including a position sensor for detecting the positions of the plurality of lenses, and a sensor driving unit for applying a bias to the position sensor; and a control unit for applying a sensing operation signal to the position sensor unit. The position sensor unit outputs a first signal and a second signal, sensed by the position sensor, at different times. The sensor driving unit applies the bias to the position sensor during a first time interval in which the first signal is outputted, and applies the bias to the position sensor during a second time interval in which the second signal is output. The first time interval and the second time interval are discontinuous.

## Description

### [Technical Field]

The present invention relates to a camera module.

### [Background Art]

Camera modules perform the function of taking pictures of subjects and saving them as images or videos, and are installed in mobile devices such as cell phones, laptops, drones, and vehicles.

Meanwhile, portable devices such as smartphones, tablet PCs, and laptops are equipped with tiny camera modules, which can perform an auto focus (AF) function that automatically adjusts the gap between the image sensor and the lens to align the focal length of the lens.

The autofocus function is essential for capturing clear still images or videos within the camera module. The autofocus function detects the position of the lens barrel, which is mounted with a magnet, using a position sensor. Based on the detected position of the lens barrel and the target position being inputted, a driving signal is provided to the driving unit. This generates a driving force between the coil of the driving unit and the magnet mounted on the lens barrel, causing the lens barrel to move to the focus position, thereby performing the autofocus function.

During AF, OIS, and zoom driving, a bias current must always be applied to the position sensor for sensing operation. Even when AF, OIS, and zoom driving are not in use, current is constantly flowing to the position sensor, resulting in high overall power consumption. Furthermore, there is a problem in that self-heating of the position sensor may occur due to the high power consumption.

### [Detailed Description of the Invention]

### [Technical Subject]

The technical problem to be solved by the present invention is to provide a camera module.

### [Technical Solution]

To solve above problems, a camera module according to an embodiment of the present invention includes: a lens driving unit for driving a plurality of lenses; a position sensor unit including a position sensor for detecting the positions of the plurality of lenses, and a sensor driving unit for applying a bias to the position sensor; and a control unit for applying a sensing operation signal to the position sensor unit. The position sensor unit outputs a first signal and a second signal, sensed by the position sensor, at different times. The sensor driving unit applies the bias to the position sensor during a first time interval in which the first signal is output, and applies the bias to the position sensor during a second time interval in which the second signal is output. The first time interval and the second time interval are discontinuous.

In response to the sensing operation signal, the sensor driving unit can be turned on or off.

The position sensor unit can output the first signal and the second signal only while the sensing operation signal is applied.

The sensing operation signal may not be provided to the position sensor unit during the time when the first signal and the second signal are not outputted.

During a third time interval between the first time interval and the second time interval, the sensor driving unit may not apply the bias to the position sensor.

The position sensor unit includes an amplifier being connected to the position sensor, and an analog-to-digital converter being connected to the amplifier, and the analog-to-digital converter can output the first signal and the second signal.

The position sensor includes a plurality of position sensors being connected to one another, and the bias can be commonly applied to the plurality of position sensors.

The position sensor unit may include a plurality of position sensors and a plurality of sensor driving units that apply biases to each of the plurality of position sensors.

The plurality of position sensors includes first and second position sensors, and a time interval in which a bias is applied to the first position sensor and a time interval in which a bias is applied to the second position sensor may not be overlapped with each other.

The lens driving unit includes a first lens driving unit that drives a first lens group among the plurality of lenses and a second lens driving unit that drives a second lens group among the plurality of lenses; the position sensor includes a first position sensor that detects a position of the first lens group and a second position sensor that detects a position of the second lens group; the sensor driving unit includes a first sensor driving unit that applies a bias to the first position sensor and a second sensor driving unit that applies a bias to the second position sensor; the position sensor unit outputs a third signal sensed by the first position sensor and a fourth signal sensed by the second position sensor at different times; the first sensor driving unit applies the bias to the first position sensor during a third time interval in which the third signal is outputted; and the second sensor driving unit applies the bias to the second position sensor during a fourth time interval in which the fourth signal is outputted; and the third time interval and the fourth time interval may be discontinuous.

The lens driving unit includes an AF driving unit that drives the plurality of lenses in an optical axis direction and an OIS driving unit that drives the plurality of lenses in a direction perpendicular to an optical axis; the position sensor includes an AF position sensor that detects positions of the plurality of lenses in the optical axis direction and an OIS position sensor that detects positions of the plurality of lenses in a direction perpendicular to an optical axis; the sensor driving unit includes an AF position sensor driving unit that applies a bias to the AF position sensor and an OIS position sensor driving unit that applies a bias to the OIS position sensor; the position sensor unit outputs a fifth signal sensed by the AF position sensor and a sixth signal sensed by the OIS position sensor at different times; the AF position sensor driving unit applies the bias to the AF position sensor during a fifth time interval in which the fifth signal is outputted; the OIS position sensor driving unit applies the bias to the OIS position sensor during a sixth time interval in which the sixth signal is output; and the fifth time interval and the sixth time interval may be discontinuous.

### [Advantageous Effects]

According to the present embodiments, power consumption can be reduced by applying the bias current being applied to the position sensor only to the sensing time interval.

In addition, the temperature characteristics can be improved by reducing the self-heating of the position sensor.

In addition, by applying a higher voltage or current than before, the noise characteristics of the position sensor can be improved.

In addition, when configured with multiple position sensors such as continuous zoom, it can be applied sequentially without changing the bias capacity of the driver IC.

### [Brief Description of Drawings]

FIG. 1 is a block diagram of an internal configuration of a camera module according to the present embodiment.
FIG. 2 is a block diagram of a sensor driving unit according to the present embodiment.
FIG. 3 is a diagram illustrating the operation of a conventional sensor driving unit.
FIG. 4 is a diagram illustrating the operation of a sensor driving unit according to the present embodiment.
FIG. 5 is a block diagram of a sensor driving unit according to another embodiment of the present invention.
FIG. 6 is a diagram illustrating the connection relationship of a position sensor of a sensor driving unit according to another embodiment of the present invention.
FIG. 7 is a block diagram of a sensor driving unit according to yet another embodiment of the present invention.
FIG. 8 is a diagram illustrating the operation of a sensor driving unit according to still yet another embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and within the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention. In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used.

These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

The 'optical axis direction' used below is defined as the optical axis direction of the lens and/or image sensor being coupled to the lens driving device.

The 'vertical direction' used below may be a direction parallel to or the same direction as the optical axis direction. The vertical direction may correspond to the 'z-axis direction'. The 'horizontal direction' used below may be a direction perpendicular to the vertical direction. That is, the horizontal direction may be a direction perpendicular to the optical axis. Therefore, the horizontal direction may include the 'x-axis direction' and the 'y-axis direction'.

The 'auto focus (AF) function' used hereinafter is defined as a function that automatically focuses on a subject by adjusting the distance from the image sensor by moving the lens in the optical axis direction according to the distance of the subject so that a clear image of the subject can be obtained on the image sensor. In addition, 'closed-loop auto focus (CLAF) control' is defined as detecting the distance between the image sensor and the lens and controlling the position of the lens through feedback in real time in order to improve the accuracy of focus adjustment.

The 'optical image stabilization (OIS) function' used hereinafter is defined as a function that moves or tilts the lens in a direction perpendicular to the optical axis to offset hand shake in order to prevent an image or video from shaking due to the user's hand shake. In addition, 'closed-loop auto focus (CLAF) control' is defined as detecting the position of the lens with respect to the image sensor and controlling the feedback of the lens position in real time in order to improve the accuracy of hand shake correction.

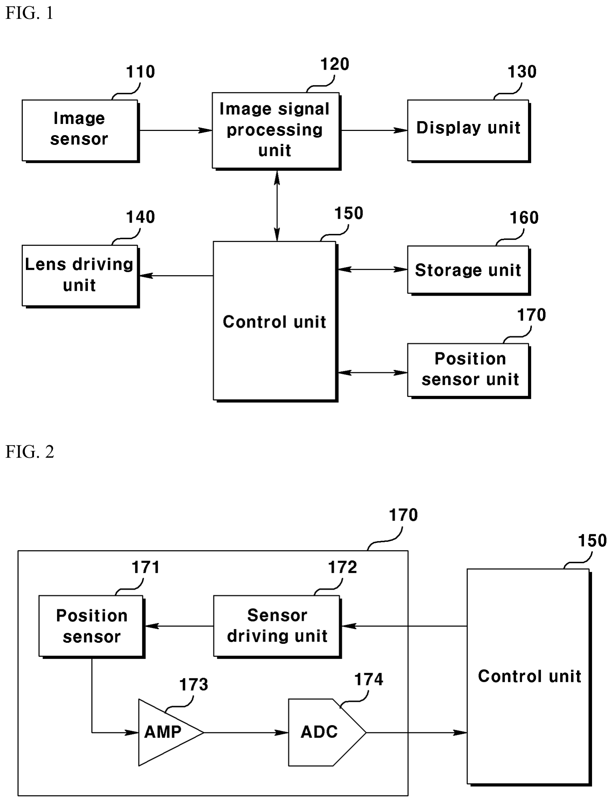

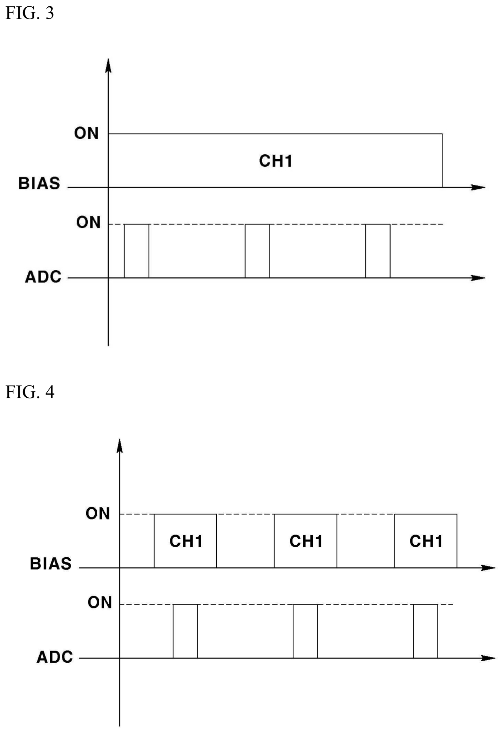

FIG. 1 is a block diagram of an internal configuration of a camera module according to the present embodiment; FIG. 2 is a block diagram of a sensor driving unit according to the present embodiment; FIG. 3 is a diagram illustrating the operation of a conventional sensor driving unit; and FIG. 4 is a diagram illustrating the operation of a sensor driving unit according to the present embodiment.

Referring to FIG. 1, the camera module may include an image sensor **110,** an image signal processing unit **120,** a display unit **130,** a lens driving unit **140,** a position sensor unit **170,** a storing unit **160,** and a control unit **150.**

The image sensor **110** processes the optical image of the subject captured through the lens. To this end, the image sensor **110** can preprocess the image acquired through the lens. In addition, the image sensor **110** can convert the preprocessed image into electrical data and output it. The image sensor **110** is configured such that a plurality of photo detectors is integrated as individual pixels, and it converts the image information of a subject into electrical data and outputs it. The image sensor **110** accumulates the amount of input light and outputs the image captured by the lens according to the accumulated amount of light in accordance with a vertical synchronization signal. At this time, the image acquisition is performed by the image sensor **110** which converts the light being reflected from the subject into an electrical signal.

The image signal processing unit **120** processes the image output through the image sensor **110** on a frame-by-frame basis. At this time, the image signal processing unit **120** may also be referred to as an image signal processor (ISP).

The display unit **130** displays the captured image in accordance with the control of the control unit **150,** and displays the setting screen required for taking a picture or a screen for selecting the user's actions.

The control unit **150** controls the overall operation of a camera module. The control unit **150** can control the lens driving unit **140** and the position sensor unit **170** to provide AF function, OIS function, and zooming function.

The storing unit **160** stores data required for the camera module to operate. The storing unit **160** may store information on the zoom position and focus position according to the distance from the subject. The focus position may be the position of the focus lens for accurately focusing on the subject. The focus position may change according to the zoom position of the zoom lens and the distance from the subject. The storing unit **160** stores data on the zoom position and the focus position corresponding to the zoom position according to the distance.

The lens driving unit **140** can drive a plurality of lenses. The lens driving unit **140** can drive the plurality of lenses in an optical axis direction or in a direction perpendicular to the optical axis. The lens driving unit **140** can include a lens driving actuator. The lens driving actuator may include a fixed part and a moving part. The fixed part may be a part that is relatively fixed when the moving part moves. The moving part can move with respect to the fixed part. The moving part can be movably arranged with respect to the fixed part. The moving part can move with respect to the fixed part by the driving unit. The moving part can move during AF driving. The moving part can move during OIS driving. A lens may be coupled to the moving part.

A lens driving actuator may comprise a housing, a bobbin being disposed within the housing and for mounting a lens module, a coil being disposed on the bobbin, a magnet being disposed in the housing and facing the coil, an upper elastic member being coupled to an upper portion of the bobbin and an upper portion of the housing, a lower elastic member being coupled to a lower portion of the bobbin and a lower portion of the housing, and a base. In another embodiment, the coil may be disposed in the housing, and the magnet may be disposed on the bobbin. In another embodiment, a ball member may be disposed between the housing and the bobbin, excluding the upper elastic member and the lower elastic member. In yet another embodiment, a support member made of a wire may be disposed between the housing and the base.

The lens driving unit **140** can drive the lens driving actuator by receiving a signal generated from the control unit **150.** The lens driving unit **140** can apply a driving signal to the lens driving actuator to move the moving part in at least one direction among the optical axis direction (first axis direction (z-axis)), the direction perpendicular to the optical axis (second axis direction (x-axis), third axis direction (y-axis)).

The lens driving unit **140** may include an AF driving unit that drives a plurality of lenses in an optical axis direction and an OIS driving unit that drives the plurality of lenses in a direction perpendicular to the optical axis. The lens driving unit **140** may include a zoom driving unit. The lens driving unit **140** may include a first lens driving unit that drives a first lens group among the plurality of lenses and a second lens driving unit that drives a second lens group among the plurality of lenses. Here, the plurality of lenses may include a fixed group that is fixed to the camera module in addition to the first and second lens groups that drive in an optical axis direction or in a direction perpendicular to the optical axis.

The position sensor unit **170** may include a position sensor **171** and a sensor driving unit **172,** and may include an amplifier **173** and an analog-to-digital converter **174.**

The position sensor **171** can detect the positions of multiple lenses. The position sensor **171** may be a Hall sensor (Hall IC). The position sensor **171** may be an MR sensor. The position sensor **171** may be implemented as a single configuration with a lens driving unit **140** composed of a driver IC. The lens driving unit **140** and the position sensor **171** may be implemented as separate configurations. The position sensor **171** can detect the movement of a magnet. The movement amount or position of the magnet detected by the position sensor **171** can be used for feedback of AF driving, OIS driving, and zoom driving. The control unit **150** can determine whether to perform additional movement of a moving part based on the detection value received from the position sensor **171,** and such a process may occur in real time.

The position sensor **171** may include an AF position sensor that detects the positions of the plurality of lenses in an optical axis direction and an OIS position sensor that detects the positions in a direction perpendicular to the optical axis of the plurality of lenses. The position sensor **171** may include a first position sensor that detects the position of the first lens group and a second position sensor that detects the position of the second lens group. This is merely exemplary, and the plurality of position sensors **171** may include position sensors in addition to the first position sensor and the second position sensor.

The sensor driving unit **172** can apply a bias to the position sensor **171** according to the driving signal generated by the control unit **150.** The sensor driving unit **172** may be referred to as a bias provider that applies a bias current or a bias voltage to the position sensor **171.** The sensor driving unit **172** may be implemented as a driver IC (Integrated Circuit) like the lens driving unit **140.** The sensor driving unit **172** may be mounted on a substrate and may be electrically connected to the position sensor **171** through the substrate.

The control unit **150** can apply a sensing operation signal to the position sensor **171.** The control unit **150** can apply a driving signal to the sensor driving unit **172** according to the sensing operation signal applied to the position sensor **171.** The sensor driving unit **172** can be turned on or off in response to the sensing operation signal. The control unit **150** can first apply a driving signal to the sensor driving unit **172** before applying the sensing operation signal to the position sensor **171.** Through this, a bias can be applied to the position sensor **171** before the position sensor **171** performs a sensing operation. The control unit **150** can control the on or off of the driving signal according to the on or off of the sensing operation signal. The sensor driving unit **172** can apply a bias to the position sensor **171** only when the position sensor **171** performs sensing operation and the analog-to-digital converter **174** reads the sensing signal.

The position sensor unit **170** can output a signal sensed by the position sensor **171** to the control unit **150.** The position sensor unit **170** can output a first signal and a second signal sensed by the position sensor **171** at different times. The first signal and the second signal can be outputted to the control unit **150** by an analog-to-digital converter.

The sensor driving unit **172** can apply a bias to the position sensor **171** during a first time interval in which a first signal is output, and can apply a bias to the position sensor **171** during a second time interval in which a second signal is output. Here, the first time interval and the second time interval may be discontinuous.

The position sensor unit **170** can output a first signal and a second signal only while the sensing operation signal is applied. The sensing operation signal may not be provided to the position sensor unit **170** during a time when the first signal and the second signal are not outputted. During a third time interval between the first time interval and the second time interval, the sensor driving unit **172** may not apply a bias to the position sensor **171.**

Referring to FIG. 3, the conventional sensor driving unit **172** had a problem of high current consumption because it always maintained a state of applying bias regardless of the operation of the position sensor **171.** Referring to FIG. 4, the sensor driving unit **172** according to the present embodiment can minimize current consumption by applying bias current only during the sensing operation of the position sensor **171.**

Compared to the conventional method of always applying a bias to the position sensor, in the present embodiment, when a bias is applied only during the sensing operation of the position sensor **171,** a higher current or voltage can be applied than in the conventional method, thereby minimizing the occurrence of signal noise. In addition, it can be applied without changing the bias capacity of the driver IC when sequentially driving through multiple position sensors, such as continuous zooming.

One end of the position sensor **171** can be connected to the sensor driving unit **172,** and the other end of the position sensor **171** can be connected to the amplifier **173.** One end of the position sensor **171** can be connected to the sensor driving unit **172,** and the other end of the position sensor **171** can be connected to the analog-to-digital converter **174.** Here, one end can be referred to as an input end, and the other end can be referred to as an output end. The amplifier **173** can amplify a signal for a detection signal from the position sensor **171.** When the amplifier **173** is connected to a plurality of position sensors **171,** a sum signal for the detection signals detected by each position sensor **171** can be inputted.

The amplifier **173** includes a non-inverting terminal (+) and an inverting terminal (-). The amplifier **173** differentially amplifies a signal input to the non-inverting terminal (+) and a signal input to the inverting terminal (-) and outputs the signal to the analog-to-digital converter **174.** The output signal for the plurality of sensor units **310** has amplitude of several mV, which is amplitude that does not match the input range of the analog-to-digital converter **174.** Therefore, the amplifier **173** differentially amplifies and outputs the signal being inputted through the non-inverting terminal (+) and the inverting terminal (-) in order to match the input range of the analog-to-digital converter **174.**

The analog-to-digital converter **174** receives an analog signal from the amplifier **173,** and converts the received analog signal into a digital signal and outputs it accordingly. The analog-to-digital converter **174** receives an analog signal from the amplifier **173** and outputs it as a multi-bit digital signal. At this time, the output signal of the analog-to-digital converter **174** can be expressed as values of 0 and 1.

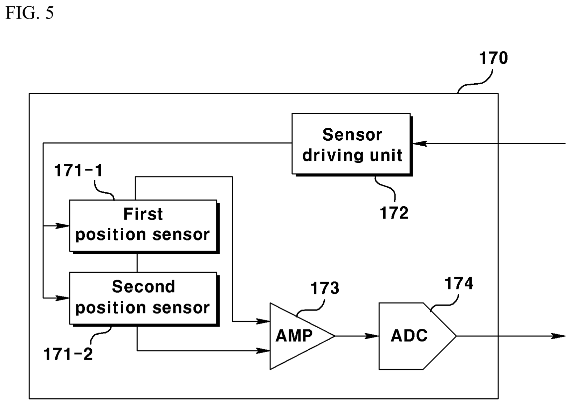

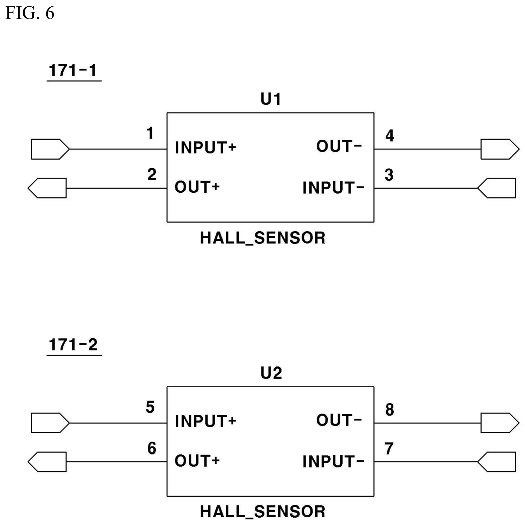

FIG. 5 is a block diagram of a sensor driving unit according to another embodiment of the present invention; and FIG. 6 is a diagram illustrating the connection relationship of a position sensor of a sensor driving unit according to another embodiment of the present invention.

Referring to FIG. 5, the position sensor **171** may include a plurality of position sensors **171** that are connected to one another. The plurality of position sensors may include a first position sensor **171-1** and a second position sensor **171-2.** The first position sensor **171-1** and the second position sensor **171-2** may be connected in series.

Referring to FIG. 6, each position sensor may include four terminals, two of which may be input terminals, and the remaining two may be output terminals. Two of the input terminals may be power input terminals, and two of the output terminals may be output terminals of a detection signal.

A bias is applied to the first terminal (INPUT+) of the first position sensor **171-1,** and the second terminal (OUT+) can be connected to an amplifier **173** to output a signal. The fourth terminal (OUT-) of the first position sensor **171-1** can be connected to the sixth terminal (OUT+) of the second position sensor **171-2,** and the third terminal (INPUT-) can be connected to a current control circuit or ground. A bias is applied to the fifth terminal (INPUT-) of the second position sensor **171-2,** and the sixth terminal (OUT+) can be connected to the fourth terminal (OUT-) of the first position sensor **171-1.** The seventh terminal (INPUT-) of the second position sensor **171-2** can be connected to a current control circuit or ground, and the eighth terminal (OUT-) can be connected to an amplifier **173** to output a signal.

The first position sensor **171-1** and the second position sensor **171-2** can be connected to one sensor driving unit **172,** one amplifier **173,** and an analog-to-digital converter **174.** The position sensor unit **170** implemented so that the same bias is applied to multiple position sensors at the same timing may mean that it is implemented as one channel. The control unit **150** can control the driving signal so that the sensor driving unit **172** applies the same bias to multiple position sensors according to the sensing operation signal. The bias can be applied in common to multiple position sensors.

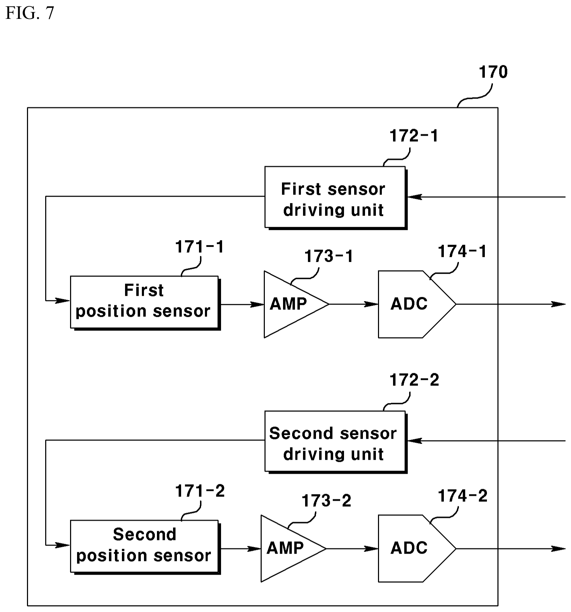

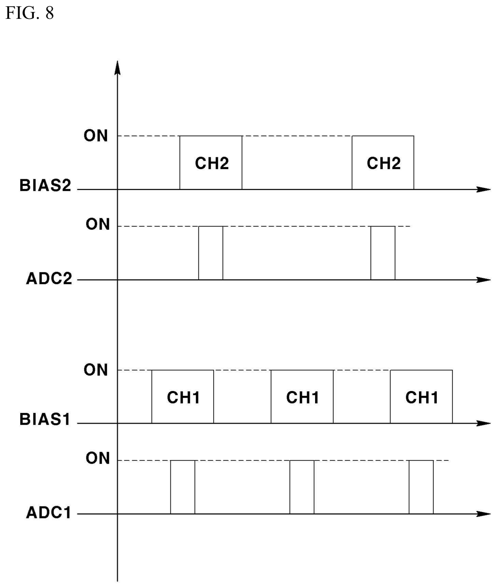

FIG. 7 is a block diagram of a sensor driving unit according to yet another embodiment of the present invention; and FIG. 8 is a diagram illustrating the operation of a sensor driving unit according to still yet another embodiment of the present invention.

A position sensor unit **170** according to another embodiment of the present invention may include a plurality of position sensors and a plurality of sensor driving units that apply biases to each of the plurality of position sensors. Referring to FIG. 7, the position sensor unit **170** may include a first sensor driving unit **172-1,** a first amplifier **173-1,** and a first analog-to-digital converter **174-1** being connected to a first position sensor **171-1,** and may include a second sensor driving unit **172-2,** a second amplifier **173-2,** and a second analog-to-digital converter **174-2** being connected to a second position sensor **171-2.** The position sensor unit **170** implemented so that different biases are applied to each position sensor at different timings may mean that it is implemented with a plurality of channels. The position sensor unit **170** including two sensor driving units illustrated in FIG. 7 may mean that it is implemented with two channels.

The control unit **150** can control the plurality of sensor driving units to apply bias to the plurality of position sensors, respectively, according to the sensing operation signals of each of the plurality of position sensors. The control unit **150** can control the first sensor driving unit **172-1** and the second sensor driving unit **172-2** to apply bias to the connected position sensors, respectively, according to the different sensing operation signals of the first position sensor **171-1** and the second position sensor **171-2.**

The position sensor unit **170** can output a first signal sensed by the first position sensor **171-1** and a second signal sensed by the second position sensor **171-2** at different times. The first sensor driving unit **172-1** can apply a bias to the first position sensor **171-1** during a first time interval in which the first signal is outputted. The second sensor driving unit **172-2** can apply a bias to the second position sensor **171-2** during a second time interval in which the second signal is outputted. The first time interval and the second time interval may be discontinuous.

The position sensor unit **170** can output a first signal and a second signal only while the sensing operation signal is applied. The sensing operation signal may not be provided to the position sensor unit **170** during a time when the first signal and the second signal are not outputted. During a third time interval between the first time interval and the second time interval, the sensor driving unit **172** may not apply a bias to the plurality of position sensors.

The control unit **150** can control the on or off signal of the first driving signal applied to the first sensor driving unit **172-1** according to the on or off of the first sensing operation signal that operates the first position sensor **171-1.** The control unit **150** can control the on or off signal of the second driving signal applied to the second sensor driving unit **172-2** according to the on or off of the second sensing operation signal that operates the second position sensor **171-2.**

The interval in which a bias is applied to the first position sensor **171-1** and the interval in which a bias is applied to the second position sensor **171-2** may not be overlapped with each other. At least a portion of the interval in which a bias is applied to the first position sensor **171-1** and the interval in which a bias is applied to the second position sensor **171-2** may be overlapped with each other.

Those skilled in the art related to the present embodiment will understand that the above-described description can be implemented in a modified form without departing from the essential characteristics thereof. Therefore, the disclosed methods should be considered from an illustrative rather than a restrictive perspective. The scope of the present invention is indicated by the claims, not the above description, and all differences within the scope equivalent thereto should be interpreted as being included in the present invention.

## Claims

1. A camera module comprising:
a lens driving unit for driving a plurality of lenses;
a position sensor unit including a position sensor for detecting the positions of the plurality of lenses and a sensor driving unit for applying a bias to the position sensor; and
a control unit for applying a sensing operation signal to the position sensor unit,
wherein the position sensor unit outputs a first signal and a second signal, sensed by the position sensor, at different times,
wherein the sensor driving unit applies the bias to the position sensor during a first time interval in which the first signal is output, and applies the bias to the position sensor during a second time interval in which the second signal is outputted, and
wherein the first time interval and the second time interval are discontinuous.

2. The camera module according to claim 1,
wherein the sensor driving unit is turned on or off in response to the sensing operation signal.

3. The camera module according to claim 1,
wherein the position sensor unit outputs the first signal and the second signal only while the sensing operation signal is applied.

4. The camera module according to claim 3,
wherein the sensing operation signal is not be provided to the position sensor unit during the time when the first signal and the second signal are not outputted.

5. The camera module according to claim 1,
wherein the sensor driving unit does not apply the bias to the position sensor during a third time interval between the first time interval and the second time interval.

6. The camera module according to claim 1,
wherein the position sensor unit includes an amplifier being connected to the position sensor, and an analog-to-digital converter being connected to the amplifier, and
wherein the analog-to-digital converter outputs the first signal and the second signal.

7. The camera module according to claim 1,
wherein the position sensor includes a plurality of position sensors being connected to one another, and
wherein the bias is commonly applied to the plurality of position sensors.

8. The camera module according to claim 1,
wherein the position sensor unit includes a plurality of position sensors and a plurality of sensor driving units that apply biases to each of the plurality of position sensors,
wherein the plurality of position sensors include first and second position sensors, and
wherein a time interval in which a bias is applied to the first position sensor and a time interval in which a bias is applied to the second position sensor may not be overlapped with each other.

9. The camera module according to claim 1,
wherein the lens driving unit includes a first lens driving unit that drives a first lens group among the plurality of lenses and a second lens driving unit that drives a second lens group among the plurality of lenses,
wherein the position sensor includes a first position sensor that detects a position of the first lens group and a second position sensor that detects a position of the second lens group,
wherein the sensor driving unit includes a first sensor driving unit that applies a bias to the first position sensor and a second sensor driving unit that applies a bias to the second position sensor,
wherein the position sensor unit outputs a third signal sensed by the first position sensor and a fourth signal sensed by the second position sensor at different times,
wherein the first sensor driving unit applies the bias to the first position sensor during a third time interval in which the third signal is outputted,
wherein the second sensor driving unit applies the bias to the second position sensor during a fourth time interval in which the fourth signal is outputted, and
wherein the third time interval and the fourth time interval are discontinuous.

10. The camera module according to claim 1,
wherein the lens driving unit includes an AF driving unit that drives the plurality of lenses in an optical axis direction and an OIS driving unit that drives the plurality of lenses in a direction perpendicular to an optical axis,
wherein the position sensor includes an AF position sensor that detects positions of the plurality of lenses in the optical axis direction and an OIS position sensor that detects positions of the plurality of lenses in a direction perpendicular to an optical axis,
wherein the sensor driving unit includes an AF position sensor driving unit that applies a bias to the AF position sensor and an OIS position sensor driving unit that applies a bias to the OIS position sensor,
wherein the position sensor unit outputs a fifth signal sensed by the AF position sensor and a sixth signal sensed by the OIS position sensor at different times,
wherein the AF position sensor driving unit applies the bias to the AF position sensor during a fifth time interval in which the fifth signal is outputted,
wherein the OIS position sensor driving unit applies the bias to the OIS position sensor during a sixth time interval in which the sixth signal is outputted, and
wherein the fifth time interval and the sixth time interval are discontinuous.
